**Europäisches Patentamt**

**European Patent Office**

**Office européen des brevets**

(19)

(11) Veröffentlichungsnummer: **0 178 599**
**B1**

(12) ## EUROPÄISCHE PATENTSCHRIFT

(45) Veröffentlichungstag der Patentschrift: **19.09.90**

(51) Int. Cl.⁵: **F 16 K 1/52, F 16 K 37/00**

(21) Anmeldenummer: **85112889.2**

(22) Anmeldetag: **11.10.85**

(54) Stellventil, insbesondere Drosselventil.

(30) Priorität: **13.10.84 DE 3437593**

(43) Veröffentlichungstag der Anmeldung:
**23.04.86 Patentblatt 86/17**

(45) Bekanntmachung des Hinweises auf die
Patenterteilung:
**19.09.90 Patentblatt 90/38**

(84) Benannte Vertragsstaaten:
**AT BE CH FR GB IT LI NL SE**

(56) Entgegenhaltungen:
**DE-A-2 650 877**
**FR-A-1 333 232**
**GB-A- 412 118**
**GB-A-1 211 683**

(73) Patentinhaber: **Flutec Fluidtechnische Geräte
GmbH
Industriestrasse
D-6603 Sulzbach/Saar (DE)**

(72) Erfinder: **Schön, Otmar, Dipl.-Ing.
Am Kirschenberg 5
D-6601 Scheidterberg (DE)**

(74) Vertreter: **Patentanwälte Phys. Bartels Dipl.-Ing.
Fink Dr.-Ing. Held
Lange Strasse 51
D-7000 Stuttgart 1 (DE)**

Courier Press, Leamington Spa, England.

**Beschreibung**

Die Erfindung bezieht sich auf ein Stellventil entsprechend dem Oberbegriff des Anspruchs 1.

Dahingehende Stellventile wurden vor dem Anmeldetag dieser Erfindung von Anbeitern auf dem Gebiet der Hydrauliktechnik hergestellt und vertrieben. Bei diesen Stellventilen besteht die Gefahr, daß beim Zerstören des Drehknopfes und/oder von dessen axialer Halterung durch Abscheren des Haltegliedes oder des die Ringnut auf seiten des Drehknopfes begrenzenden Flansches die Gewindeverbindung zwischen der Ventilbuchse und dem Ventilschaft gelöst wird, wodurch das Ventilglied aus seiner Lage sich entfernt und Druckmittel ausströmen kann. Steht dieses Druckmittel unter hohem Druck, so kann die Gewindeverbindung auch schon zerstört werden, wenn nur wenige Gewindgänge noch miteinander verbunden sind.

Es gehört auch zum Stand der Technik, wie dies die Druckschriften GB—A—412 118 und die FR—A—1 333 232 zeigen, bei ein Fluid führenden Teilen die Bewegungsfreiheit eines axial bewegbaren Schaftes durch einen radial verlaufenden Stift zu begrenzen, der in eine innerhalb des Schaftes verlaufende Nut eingreift und mit dieser einen Anschlag bildet. Allein die Übertragung dieses Anschlages auf ein Stellventil der oben genannten Art würde noch immer keine volle Sicherheit mit sich bringen, denn bei einem Versagen dieser weiteren Sicherungsstufe in Form des Anschlages, beispielsweise durch Abscheren des radialen Stiftes, könnte, insbesondere wenn das Druckmittel unter hohem Druck steht, dieses zusammen mit dem Ventilschaft nach wie vor aus der Ventilbuchse austreten.

Ausgehend von diesem Stand der Technik liegt der Erfindung die Aufgabe zu Grunde, ein Stellventil dahingehend weiterzubilden, daß dieses mit absoluter Sicherheit betreibbar ist. Diese Aufgabe wird durch die Merkmale im kennzeichnenden Teil des Hauptanspruchs erfindungsgemäß gelöst. Dadurch, daß neben dem in die am Ventilschaft angeordnete Sicherungsnut eingreifenden Sicherungsglied noch zwischen dem Ventilglied und dem Außengewinde des Ventilschaftes eine entsprechende Sollbruchstelle, vorzugsweise im Bereich der Sicherungsnut selbst vorgesehen ist, wird erreicht, daß im Falle des Versagens eher der Ventilschaft im Bereich der Sollbruchstelle als das radial hervorstehende, in die Sicherungsnut eingreifende Sicherungsglied bricht. Hierdurch ist mit Sicherheit erreicht, daß der Ventilschaft mit dem Ventilglied, auch bei hohem Druck des Druckmittels, durch das Sicherungsglied gehalten in der Ventilbuchse verbleibt und Druckmittel nicht austreten kann.

Die Merkmale der Ansprüche 2 bis 8 betreffen bevorzugte Weiterbildungen der Erfindung.

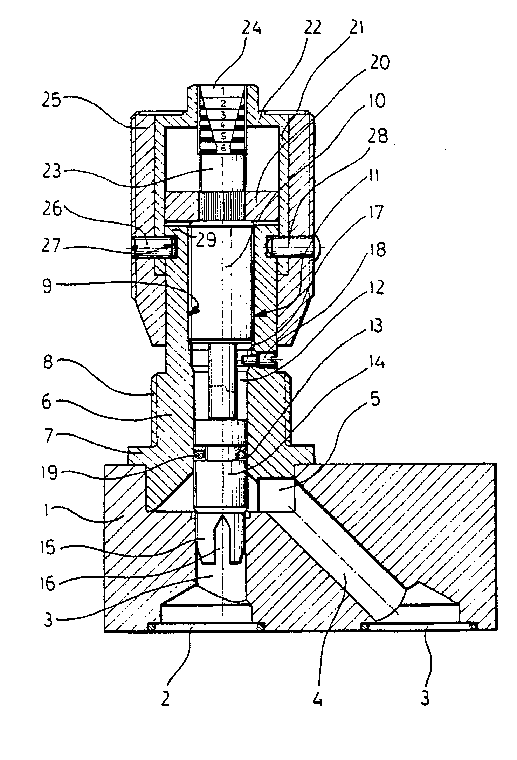

Weitere Vorteile ergeben sich aus der Beschreibung und der Zeichnung. In dieser ist ein Drosselventil als Ausführungsbeispiel des Gegenstandes der Erfindung im Längsschnitt schematisch dargestellt.

Ein plattenförmiges Ventilgehäuse 1 hat auf seiner in der Zeichnung unteren flachen Seite zwei nebeneinander liegende Anschlußstellen 2 und 3, die mit Kanälen 3 und 4 verbunden sind, welche in eine gemeinsame zylinderförmige Ausnehmung 5 an der oberen flachen Seite des Ventilgehäuses 1 münden. In diese Ausnehmung ist der untere Teil einer Ventilbuchse 6 eingesetzt, die mit ihrem Befestigungsflansch 7 auf dem Ventilgehäuse 1 aufsteht und mittels nicht dargestellter Schrauben damit verbunden ist. Oberhalb des Befestigungsflansches 7 ist ein Außengewinde 8 vorgesehen. Danach folgt ein außenzylindrischer Teil, der ein Innengewinde 9 hat, in welches ein Außengewinde 10 eines Ventilschaftes 11 eingeschraubt ist.

Der Ventilschaft 11 hat von seinem Außengewinde aus in Richtung zum Ventilgehäuse 1 gesehen eine Sicherungsnut 12 und einen von einer Dichtnut 13 unterbrochenen zylindrischen Teil 14, an dessen freien Ende ein Ventilglied 15 angeordnet ist. Das Ventilglied 15 hat in seiner Mitte einen Spalt 16 und ein kegelförmig sich verjüngendes Ende. Der Übergang zwischen dem zylindrischen Teil 14 und dem Ventilglied 15 ist kegelstumpfförmig ausgebildet und dient als mit dem Ventilgehäuse 1 zusammenwirkender Ventilsitz.

In die Sicherungsnut 12 greift ein radial angeordneter Sicherungsstift 17 ein, ohne den Grund der Sicherungsnut 12 zu berühren. Der Sicherungsstift 17 ist mit seinem Gewindeteil 18 in die Ventilbuchse 6 eingeschraubt. Die axiale Länge der Sicherungsnut 12 gleicht der Summe des maximalen Hubes des Ventilgliedes 15 und der Breite des insbesondere zylindrisch ausgebildeten Sicherungsstiftes 17 in Achsrichtung des Ventilschaftes 11 gesehen. In der Dichtnut 13 sind ein Dichtring 19 und eine Dichtscheibe untergebracht, der den Spalt zwischen dem zylindrischen Teil 14 und der Ventilbuchse 6 abdichtet.

Oberhalb des Außengewindes 10 ist auf dem Ventilschaft 11 ein Mitnehmer 20 mittels eines Rändels, eines Mehrkantes oder dgl. drehfest befestigt. Der Mitnehmer 20 ist auf seiner Außenseite als Mehrkant, insbesondere als Sechskant, ausgebildet, der in einem dem äußeren Mehrkant des Mitnehmers 20 angepaßten, hülsenförmig inneren Drehknopfteil 21 drehfest, aber axial verschiebbar angeordnet ist. Der Drehknopfteil 21 hat einen Boden 22, der von einem am Ventilschaft 11 koaxial angebrachten Anzeigestift 23 durchsetzt ist. Der Anzeigestift 23 trägt an seinem Ende eine Markierung 24, die durch Überstehen über einen Überhöhten Rand im Boden 22 die jeweilige Lage des Ventilgliedes 15 anzeigt. Der innere Drehknopfteil 21 ist in einem hohlzylindrischen äußeren Drehknopfteil 25 untergebracht, übergreift des obere Ende der Ventilbuchse 6 und liegt am oberen Teil von deren Zylindermantel an. An diesem Zylindermantel liegt etwas weiter unten auch das untere Ende des Drehknopfteiles 25 an. Eine die beiden Drehknopfteile 21 und 25 durchsetzende und in einen dieser oder in beide Drehknopfteile eingeschraubte Stiftschraube 26 greift mit Spiel in eine Ringnut 27 am oberen Ende der Ventilbuchse 6 ein. In diese Nut greift auch ein auf der gegenüberliegenden Seite angeordneter Haltestift 28 mit Spiel ein, der in einem der beiden Drehknopfteile 21, 25 oder in beiden Teilen dieser Teile befestigt ist. Die Ringnut 27 ist an ihrer Oberseite durch einen Flansch 29 begrenzt.

Der Ventilschaft 11 ist im Bereich der Sicherungsnut 12 als Sollbruchstelle ausgebildet. Die beiden Drehknopfteile 21 und 25 können zusammen auch ein Stück bilden.

Beim Drehen des auf seiner Außenseite eine Rändelung oder dgl. aufweisenden Drehknopfes 21, 25 sichern die Stiftschraube 26 und der Haltestift 28 durch Eingreifen in die Ringnut 27 die axiale Lage des Drehknopfes 21, 25 gegenüber der ortsfesten Ventilbuchse 6 und das Ventilglied 15 wird unter der Wirkung der Gewindeverbindung 9, 10 angehoben. Hierbei bewegt sich der Mitnehmer 20 in Richtung zum Boden 22 des inneren Drehknopfteiles 21. Wenn der Mitnehmer 20 den Boden 22 des inneren Drehknopfteiles 21 erreicht hat, ist ein Widerstand gegen weiteres Öffnen des ventilgliedes 15 vorhanden. Wird dieser Widerstand durch Anwendung einer äußeren Kraft überwunden, indem entweder die Stiftschraube 26 und der Haltestift 28 abgeschert oder der die Ringnut 27 auf der Oberseits begrenzende Flansch 29 zerstört wird, können der Drehknopf 21, 25 und/oder der Ventilschaft 11 nur noch kurz gedreht werden, bis der Sicherungsstift 17 an der unteren Seitenwand der Sicherungsnut 12 anliegt. Der Sicherungsstift 17 setzt damit dem Weiterdrehen des Ventilschaftes 11 einen Widerstand entgegen. Der Sicherungsstift 17 ist derart ausgebildet, daß eher der Ventilschaft 11 im Bereich der Sicherungsnut 12 (Sollbruchstelle) als der Sicherungsstift 18 bricht. Der zylindrische Teil 14 des Ventilschaftes 11 verbleibt also mit Sicherheit in der Ventilbuchse 6. Hierdurch ist die Gefahr beseitigt, daß gegebenenfalls unter hohem Druck stehendes Druckmittel infolge Entfernen des Ventilschaftes 11 aus der Ventilbuchse 6 nach außen austreten kann.

Beim Ausführungsbeispiel liegt der Gewindeteil 18 des Sicherungsstiftes 17 nach außen frei. Dieser Gewindeteil kann außen mittels eines verlängerten Drehknopfes (21, 25) oder eines gegebenenfalls in eine Nut eingesetzten Sicherungsringes abgedeckt sein. Damit der Sicherungsstift nicht in einfacher Weise aus der Ventilbuchse 6 ausgeschraubt werden kann, kann dessen nach außen offene Stirnseite gegebenenfalls zusammen mit der benachbarten Fläche der Ventilbuchse 6 mit einem Lack überzogen sein, der auch in einen Schraubendreherschlitz eindringt und das Ansetzen eines Schraubendrehers verhindert.

Der Gewindeteil 18 am Sicherungsstift 17 kann entfallen, wenn dieser mit einem Preßsitz in die Ventilbuchse 6 eingesetzt ist, wobei der Sicherungsstift ebenfalls außen abgedeckt sein kann.

Als Sicherungsglied kann auch eine im oberen Bereich des Innengewindes 9 der Ventilbuchse 6 in eine Ringnut eingesetzter Sprengring dienen, der in eine auf der vom Ventilglied 15 abgewandten Seite offene Sicherungsnut im Bereich des Außengewindes 10 des Ventilschaftes 11 eingreift.

Der Gewindeteil 18 des Sicherungsstiftes 17 kann in seiner Lage in der Ventilbuchse 6 durch einen vorzugsweise aushärtbaren Sicherungskleber festgelegt sein.

**Patentansprüche**

1. Stellventil, insbesondere Drosselventil, mit einem ein Ventilglied (15) tragenden Ventilschaft (11), welcher in einer Ventilbuchse (6) mittels einer Gewindeverbindung (9, 10) längsbewegbar angeordnet ist, und mit einem mit dem Ventilschaft über einen Mitnehmer (20) drehfest verbundenen Drehknopf (21, 25), der durch ein ihn radial durchsetzendes und in eine Ringnut (27) in der Ventilbuchse eingreifendes Halteglied (26, 28) in seiner axialen Lage gehalten ist und dessen Boden (22) als Anschlag für den Mitnehmer dient, dadurch gekennzeichnet, daß

der Ventilschaft eine Sicherungsnut (12) aufweist, in welche ein in der Ventilbuchse angebrachtes Sicherungsglied (17) eingreift,

die Sicherungsnut (12) und das Sicherungsglied (17) derart ausgebildet sind, daß das Ventilglied (15) irgendeine Lage zwischen seiner Schließlage und seiner am weitesten geöffneten Lage einnehmen kann,

das Ventilglied am Überschreiten seiner am weitesten geöffneten Lage durch die dem Ventilglied (15) benachbarte Seitenwand der Sicherungsnut (12) gehindert ist, die für die Anlage mit dem Sicherungsglied (17) vorgesehen ist, und

zwischen dem Ventilglied (15) und dem Außengewinde (10) des Ventilschaftes (11) eine Sollbruchstelle, vorzugsweise im Bereich der Sicherungsnut (12), vorgesehen ist, wobei das Sicherungsglied (17) zwischen der Sollbruchstelle und dem Ventilglied (15) am Ventilschaft (11) angreift.

2. Stellventil nach Anspruch 1, dadurch gekennzeichnet, daß der Grund der Sicherungsnut (12) zylinderförmig ausgebildet ist und einen der Sollbruchstelle entsprechenden Durchmesser hat.

3. Stellventil nach Anspruch 1, dadurch gekennzeichnet, daß die Breite der Sicherungsnut (12) gleich der Summe aus dem maximalen Hub des Ventilgliedes (15) und der Abmessung des in die Sicherungsnut (12) eingreifenden Teiles des Sicherungsgliedes (17) in Achsrichtung des Ventilschaftes (11) gesehen ist.

4. Stellventil nach einem der vorhergehenden Ansprüche, dadurch gekennzeichnet, daß das Sicherungsglied (12) nach außen abgedeckt ist.

5. Stellventil nach Anspruch 4, dadurch gekennzeichnet, daß das Sicherungsglied (12) durch den Drehknopf (21, 25) abgedeckt ist.

6. Stellventil nach Anspruch 4, dadurch gekennzeichnet, daß das Sicherungsglied (12) durch einen Sprengring abgedeckt ist.

7. Stellventil nach einem der Ansprüche 4 bis 6, dadurch gekennzeichnet, daß das Sicherungsglied (12) mittels einer Lackschicht außen abgedeckt ist.

8. Stellventil nach einem der Ansprüche 1 bis 4, dadurch gekennzeichnet, daß das Sicherungsglied ein Sprengring ist, der sich in einer Ringnut auf der Innenseite der Ventilbuchse (6) befindet und daß im Bereich des Außengewindes (10) des Ventilschaftes (11) eine auf der vom Ventilglied (15) abgewandten Seite offene Sicherungsnut vorgesehen ist.

**Revendications**

1. Servovalve, en particulier valve d'étranglement, comprenant une tige (11) portant un obturateur (15) et montée déplaçable longitudinalement dans une douille (6) au moyen d'un raccord fileté (9, 10), et un bouton rotatif (21, 25) qui, relié fixé en rotation à la tige de la valve par un entraîneur (20), est maintenu dans sa position axiale par un organe de retenue (26, 28) le traversant radialement et s'engageant dans une gorge annulaire (27) de la douille de la valve, et dont le fond (22) sert de butée à l'entraîneur, caractérisée par le fait que
la tige de la valve comporte une rainure de sécurité (12) dans laquelle s'engage un organe de blocage (17) placé dans la douille de la valve,
la rainure de sécurité (12) et l'organe de blocage (17) sont réalisés de façon que l'obturateur (15) puisse prendre n'importe quelle position entre sa position de fermeture et sa position la plus largement ouverte,
l'obturateur est empêché de dépasser sa position la plus largement ouverte par la paroi latérale de la rainure de sécurité (12) qui est voisine de l'obturateur (15) et qui est prevue pour l'application de l'organe de blocage (17), et
entre l'obturateur (15) et le filetage (10) de la tige (11) de la valve est prévu un point d'amorce de rupture, de préférence dans la zone de la rainure de sécurité (12), l'organe de blocage (17) agissant sur la tige (11) de la valve entre le point d'amorce de rupture et l'obturateur (15).

2. Servovalve selon la revendication 1, caractérisée par le fait que le fond de la rainure de sécurité (12) est réalisée cylindrique et a un diamètre correspondant au point d'amorce de rupture.

3. Servovalve selon la revendication 1, caractérisée par le fait que la largeur de la rainure de sécurité (12) est égale à la somme de la course maximale de l'obturateur (15) et de la dimension de la partie s'engageant dans la rainure de sécurité (12), de l'organe de blocage (17), vue dans le sens axial de la tige (11) de la valve.

4. Servovalve selon l'une des revendications précédentes, caractérisée par le fait que l'organe de blocage (12) est recouvert extérieurement.

5. Servovalve selon la revendication 4, caractérisée par le fait que l'organe de blocage (12) est recouvert par le bouton rotatif (21, 25).

6. Servovalve selon la revendication 4, caractérisée par le fait que l'organe de blocage (12) est recouvert par un segment de retenue.

7. Servovalve selon l'une des revendications 4 à 6, caractérisée par le fait que l'organe de blocage (12) est recouvert extérieurement d'une couche de vernis.

8. Servovalve selon l'une des revendications 1 à 4, caractérisée par le fait que l'organe de blocage est un segment de retenue qui se trouve dans une rainure annulaire sur la face interne de la douille (6) de la valve et que dans la zone du filetage (10) de la tige (11) de la valve est prévue une rainure de sécurité ouverte sur le côté opposé à l'obturateur (15).

**Claims**

1. Control valve, in particular throttle valve, with a valve stem (11) supporting a valve member (15), which stem (11) is arranged to move longitudinally in a valve sleeve (6) by means of a screw-coupling (9, 10), and with a rotary knob (21, 25) connected to the valve stem in a non-rotary manner by an entrainment member (20), which rotary knob is held in its axial position by a retaining member (26, 28) passing radially therethrough and engaging in an annular groove (27) in the valve sleeve and whereof the base (22) serves as a stop for the entrainment member, characterised in that:
the valve stem comprises a locking groove (12), in which a locking member (17) located in the valve sleeve engages,
the locking groove (12) and the locking member (17) are constructed so that the valve member (15) can occupy any position between its closed position and its widest open position,
the valve member is prevented from exceeding its widest open position by the side wall of the locking groove (12) adjacent to the valve member (15), which side wall is provided for abutment with the locking member (17), and
provided between the valve member (15) and the external thread (10) of the valve stem (11) is a predetermined breaking point, preferably in the region of the locking groove (12), the locking member (17) engaging on the valve stem (11) between the predetermined breaking point and the valve member (15).

2. Control valve according to Claim 1, characterised in that the base of the locking groove (12) is constructed to be cylindrical and has a diameter corresponding to the predetermined breaking point.

3. Control valve according to Claim 1, characterised in that the width of the locking groove (12) is equal to the sum of the maximum stroke of the valve member (15) and the dimensions of the part of the locking member (17) engaging in the locking groove (12), seen in the axial direction of the valve stem (11).

4. Control valve according to one of the preceding Claims, characterised in that the locking member (12) is covered externally.

5. Control valve according to Claim 4, characterised in that the locking member (12) is covered by the rotary knob (21, 25).

6. Control valve according to Claim 4, characterised in that the locking member (12) is covered by a spring ring.

7. Control valve according to one of Claims 4 to 6, characterised in that the locking member (12) is covered externally by a layer of varnish.

8. Control valve according to one of Claims 1 to 4, characterised in that the locking member is a spring ring, which is located in an annular groove on the inside of the valve sleeve (6) and that provided in the region of the external thread (10) of the valve stem (11) is a locking groove open on the side remote from the valve member (15).